# EUROPÄISCHE PATENTANMELDUNG

(11) **EP 1 489 533 A2**
(43) Veröffentlichungstag der Anmeldung: **22.12.2004**
(21) Anmeldenummer: 04101827.6
(22) Anmeldetag: 29.04.2004
(51) Int. Cl.: G06F 17/50

(54) **Verfahren zur Berechnung eines Stossverhaltens eines fluidgefüllten Behälters**

(30) Priorität: 17.06.2003 DE 10327506
(71) Anmelder: SIEMENS AKTIENGESELLSCHAFT, 80333 München (DE)
(72) Erfinder: Kretzschmar, Sven, 58300, Wetter (DE); Penzar, Zlatko, 60529, Frankfurt (DE); Rumpf, Bernd, 61130, Nidderau (DE)

(57) **Zusammenfassung**

Bei einem Verfahren zur Berechnung eines Stoßverhaltens eines fluidgefüllten Behälters werden für das Fluid Kennzahlen und/oder Stoffwerte eines Festkörpers eingesetzt und die Kennzahlen und/oder Stoffwerte denen eines Fluids angenähert. Dies führt zu einer starken Vereinfachung der Berechnung des Stoßverhaltens des Behälters.

## Beschreibung

Die Erfindung betrifft ein Verfahren zur Berechnung eines Stoßverhaltens eines fluidgefüllten Behälters, insbesondere Verfahren zur Berechnung eines Crashverhaltens eines mit Kraftstoff gefüllten Kraftstoffbehälters eines Kraftfahrzeuges, bei dem die Festigkeit und die Verformung einer Wandung des Behälters in Abhängigkeit von einem dynamischen Verhalten des in dem Behälter befindlichen Fluids berechnet wird.

Solche Verfahren zur Berechnung werden bei Computersimulationen in der Praxis häufig angewendet und sind beispielsweise als CFD-Code (CFD = Computational Fluid Dynamics) bekannt. Mit diesen Berechnungen soll beispielsweise ermittelt werden, wie sich die Wandung des Behälters verformt und möglicherweise zerstört wird. Hierdurch lässt sich beispielsweise ein Behälterfalltest simulieren.

Nachteilig bei den bekannten Verfahren ist, dass die Simulation des Verhaltens von geschlossenen, mit Fluid gefüllten Behältern mit beträchtlichem rechnerischen Aufwand und bei einer Computersimulation mit erheblichen numerischen Stabilitätsproblemen verbunden ist. Dies hat ihre Ursache in dem Zusammenspiel einer Simulation der Strömungen im Fluid und einer Festigkeitsberechnung der Wandung des Behälters.

Der Erfindung liegt das Problem zugrunde, ein Verfahren der eingangs genannten Art so zu gestalten, dass es besonders einfach durchzuführen ist und der numerische Aufwand besonders gering gehalten wird.

Dieses Problem wird erfindungsgemäß dadurch gelöst, dass für das Fluid Kennzahlen und/oder Stoffwerte eines Festkörpers eingesetzt werden und dass die Kennzahlen und/oder Stoffwerte denen eines Fluids angenähert werden.

Durch diese Gestaltung wird die Berechnung des Crashverhaltens wesentlich vereinfacht, da statt eines CFD-Codes, das Fluid durch einen Festkörper modelliert wird. Hierdurch lassen sich sowohl allgemein bekannte explizite als auch implizite FE-Codes (Finite-Elemente-Codes) nutzen, deren Berechnung wesentlich schneller und stabiler abläuft. Damit lässt sich der numerische Aufwand besonders gering halten.

Die Bewegungen des als Festkörper angenommenen Fluids lassen sich gemäß einer vorteilhaften Weiterbildung der Erfindung einfach simulieren, wenn ein besonders kleiner Wert für das Schermodul des Festkörpers eingesetzt wird. Dieser Wert kann nahe Null sein, jedoch nur so klein, dass der Algorithmus noch ausreichend stabil läuft. Hierdurch lässt sich zudem das Verhalten des Körpers im Schwerkraftfeld oder in einer Zentrifuge berechnen.

Da Flüssigkeiten wie Festkörper nahezu inkompressibel sind, lässt sich gemäß einer anderen vorteilhaften Weiterbildung der Erfindung ein Fehler bei der Berechnung besonders gering halten, wenn als Kompressionsmodul und als Dichte des Festkörpers Werte des Fluids eingesetzt werden.

Bei einem Behälterfalltest lässt sich gemäß einer anderen vorteilhaften Weiterbildung der Erfindung die maximale Belastung der Behälterwand einfach ermitteln, wenn für die Kompressionssteifigkeit des Festkörpers ein Wert eingesetzt wird, der wesentlich größer ist als der Wert der Kompressionssteifigkeit des Behälters.

Zur weiteren Verringerung der Fehler bei der Berechnung trägt es gemäß einer anderen vorteilhaften Weiterbildung der Erfindung bei, wenn ein ein Durchdringen der Behälterwand durch den Festkörper verhindernder Algorithmus ausgewählt wird. Hierdurch wird berücksichtigt, dass unter realen Bedingungen des fluidgefüllten Behälters die Flüssigkeit die Behälterwandung nicht durchdringt.

Bei halbvollem Behälter gestaltet sich das erfindungsgemäße Verfahren besonders einfach, wenn für eine oberhalb des Fluids in dem Behälter befindliche Gasschicht Kennzahlen und/oder Stoffwerte eines Festkörpers eingesetzt werden und wenn die Kennzahlen und/oder Stoffwerte denen eines Fluids angenähert werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: einen fluidgefüllten Behälter vor einem Aufprall,
- Figur 2: den fluidgefüllten Behälter nach dem Aufprall.

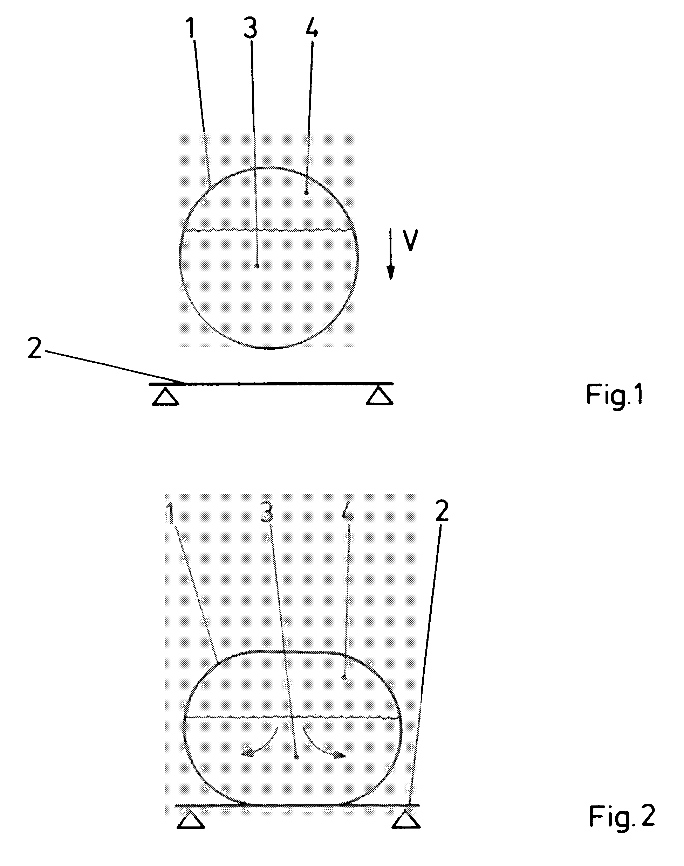

Figur 1 zeigt eine Schnittdarstellung durch einen Behälter, beispielsweise einen Kraftstoffbehälter für ein Kraftfahrzeug, mit einer vereinfacht dargestellten kugelförmigen Wandung 1. Der Behälter bewegt sich mit einer Geschwindigkeit V auf eine starre Barriere 2 zu. Der untere Teil des Behälters ist mit einer Flüssigkeit 3 gefüllt, während sich oberhalb der Flüssigkeit Luft 4 befindet.

Wenn der Behälter gegen die Barriere 2 gelangt, werden die Flüssigkeit 3 und die Luft 4 durch ihre Trägheit in Richtung Barriere 2 gedrückt. Diese Stellung ist in Figur 2 dargestellt. Dabei verformt sich die Wandung 1 des Behälters.

Das erfindungsgemäße Verfahren nähert Kennzahlen und/oder Stoffwerte der Flüssigkeit 3 und der Luft 4 denen eines Festkörpers an. Stoffwerte des Festkörpers werden denen einer Flüssigkeit entsprechend gewählt, so dass beispielsweise als Schermodul ein besonders kleiner Wert angenommen wird.

## Patentansprüche

1. Verfahren zur Berechnung eines Stoßverhaltens eines fluidgefüllten Behälters, insbesondere Verfahren zur Berechnung eines Crashverhaltens eines mit Kraftstoff gefüllten Kraftstoffbehälters eines Kraftfahrzeuges, bei dem die Festigkeit und die Verformung einer Wandung des Behälters in Abhängigkeit von einem dynamischen Verhalten des in dem Behälter befindlichen Fluids berechnet wird, **dadurch gekennzeichnet, dass** für das Fluid Kennzahlen und/oder Stoffwerte eines Festkörpers eingesetzt werden und dass die Kennzahlen und/oder Stoffwerte denen eines Fluids angenähert werden.

2. Verfahren nach Anspruch 1, **dadurch gekennzeichnet, dass** ein besonders kleiner Wert für das Schermodul des Festkörpers eingesetzt wird.

3. Verfahren nach Anspruch 1 oder 2, **dadurch gekennzeichnet, dass** als Kompressionsmodul und als Dichte des Festkörper Werte des Fluids eingesetzt werden.

4. Verfahren nach zumindest einem der vorhergehenden Ansprüche, **dadurch gekennzeichnet, dass** für die Kompressionssteifigkeit des Festkörpers ein Wert eingesetzt wird, der wesentlich größer ist als der Wert der Kompressionssteifigkeit des Behälters.

5. Verfahren nach zumindest einem der vorhergehenden Ansprüche, **dadurch gekennzeichnet, dass** ein ein Durchdringen der Behälterwand durch den Festkörper verhindernder Algorithmus ausgewählt wird.

6. Verfahren nach zumindest einem der vorhergehenden Ansprüche, **dadurch gekennzeichnet, dass** für eine oberhalb des Fluids in dem Behälter befindliche Gasschicht Kennzahlen und/oder Stoffwerte eines Festkörpers eingesetzt werden und dass die Kennzahlen und/oder Stoffwerte denen eines Fluids angenähert werden.
